# EUROPEAN PATENT APPLICATION

(11) **EP 1 114 771 A1**
(43) Date of publication of application: **11.07.2001**
(21) Application number: 99830750.8
(22) Date of filing: 02.12.1999
(51) Int. Cl.: B63H 9/06, B32B 5/08, B32B 5/22, B32B 27/12

(54) **Composite material, particularly for sails and the like**

(71) Applicant: ROX SAILS (IRELAND) LIMITED, Dublin (IE)
(72) Inventor: Rossignol, Pascal, 12070 Najac (FR); Zaoli, Giuseppe, 18038 San Remo (Prov.di Imperia) (IT)
(74) Representative: Modiano, Guido, Dr.-Ing.

(57) **Abstract**

A composite material, particularly for sails and the like, comprising:
a first outer polymeric film (2) and a second outer polymeric film (3);
a mesh layer (4) interposed between the first and second outer films;
at least one layer of fibers (5) interposed between the mesh layer (4) and one of the first and second outer films (2, 3);
the at least one layer of fibers (5) being composed of mutually crossed nonparallel individual fibers.

## Description

The present invention relates to a composite material, particularly for sails and the like. More particularly, the invention relates to a composite material and to a sail made of such composite material.

It is known that modern sails are no longer made of fabric such as Dacron and the like but are manufactured by using composite or laminated plastic materials which are constituted by a plurality of layers which are bonded to each other, with fibers inserted between outer flexible polymeric films.

Conventional sails, manufactured by using such composite material, necessarily require reinforcements at the tack, head and clew points, i.e., at the three corners of the sail, if the sail is triangular, and said reinforcements must be provided separately with respect to the panels that constitute the sail.

In the panels, furthermore, the fibers are arranged substantially parallel to each other and in any case so that the fibers never mutually cross and overlap, and they are deposited without tension onto the polymeric films. In practice, the fibers that belong to one layer of fibers never cross each other.

This entails that shape permanence to stress ceases after a period of use, consequently damaging the optimum profile of the sail.

Moreover, the material described above for manufacturing sails and the like is subject to a significant percentage of shrinkage or elongation after intense use, possibly leading to damage to the optimum shape of the sail and therefore requiring replacement.

Conventional composite or laminated materials used for sails, for example, are further constituted, as mentioned, by two polymeric films between which the fibers and/or a stabilization mesh are inserted. The polymeric films are bonded to the fibers by means of large amounts of adhesive which accordingly increase the weight of the material, with evident disadvantages as regards the lightness of the sail that can be obtained.

Moreover, the arrangement of the fibers in a conventional composite material, i.e., as mentioned, substantially parallel to each other, causes the material to have a substantially unidirectional fiber arrangement; accordingly, when said material is cut into panels which must subsequently be assembled to provide for example a sail, the following drawback occurs.

The unidirectional arrangement of the fibers of the composite material causes the individual panels cut from said material, which must then be mutually assembled, to have a resulting fiber arrangement which does not perfectly follow the profile of the stresses of the sail, since the unidirectional arrangement of the fibers entails that there are points of great discontinuity between the fibers of one panel and the fibers of the panel that is adjacent to it.

This entails a less than optimum stress distribution and therefore reduces the theoretical efficiency of the sail.

Sails are also known which are formed monolithically by means of a mold. In this case, since it is necessary to strengthen certain regions of the sail, it is necessary to increase the density of the fibers of the entire part that constitutes the sail, to the detriment of the lightness of the sail.

The aim of the present invention is to provide a composite material, particularly for sails and the like, which has optimum shape permanence to stress.

Within the scope of this aim, an object of the present invention is to provide a composite material, particularly for sails and the like, which has a negligible shrinkage percentage even following intense use.

Another object of the present invention is to provide a composite material, particularly for sails and the like, in which the use of adhesive is reduced considerably with respect to conventional materials, with a consequent lighter weight.

Another object of the present invention is to provide a sail made of composite material which does not require particular reinforcements at the clew, head and tack points.

Another object of the present invention is to provide a sail made of composite material in which the number of panels that constitute the sail is significantly smaller than the number of panels required for sails manufactured with conventional materials.

Another object of the present invention is to provide a composite material, particularly for sails and the like, which is highly reliable, very simple to manufacture and at competitive costs.

This aim, these objects and others which will become apparent hereinafter are achieved by a composite material, particularly for sails and the like, comprising:
a first outer polymeric film and a second outer polymeric film;
a mesh layer interposed between said first and second outer films;
at least one layer of fibers interposed between said mesh layer and one of said first and second outer films;
characterized in that said at least one layer of fibers is composed of mutually crossed nonparallel individual fibers.

Further characteristics and advantages of the invention will become apparent from the description of preferred but not exclusive embodiments of the composite material according to the present invention, illustrated only by way of non-limitative example in the accompanying drawings, wherein:

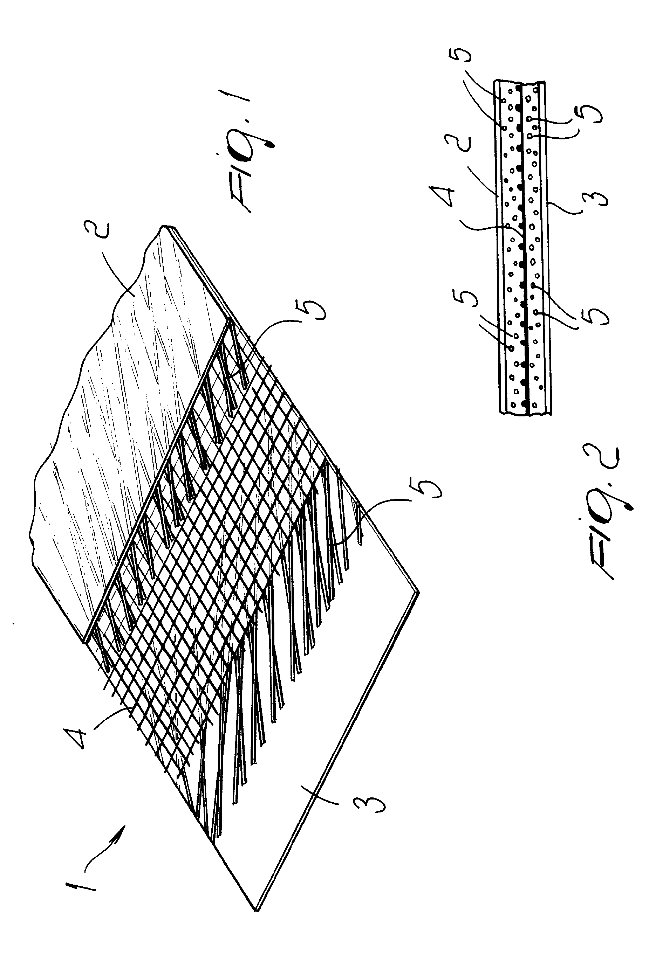

Figure 1 is a sectional perspective view of the material according to the present invention;
Figure 2 is a transverse sectional view of the material according to the present invention;
Figure 3 is a schematic view of panels made of the material according to the invention, having a shape suitable for manufacturing a sail;
Figure 4 is a schematic view of the orientation of the fibers of the material according to the invention in two separate points of the sail.

With reference to the above-cited figures, the material according to the present invention, generally designated by the reference numeral 1, comprises the pair of flexible polymeric films 2 and 3, which are suitable to constitute a sandwich inside which a layer composed of a bidirectional or three-directional mesh 4 is inserted.

The particularity of the invention resides in that it provides at least one layer 5 of individual nonparallel and mutually crossed fibers, which is interposed between the polymeric film 2 and the mesh 4. Preferably, there are two layers of mutually crossed nonparallel individual fibers 5 which are arranged at each face of the mesh 4, each directly in contact with the polymeric film 2 and 3, respectively.

The layer 5 of nonparallel and mutually crossed fibers is assembled by bonding to the mesh.

The layer 5 of nonparallel and mutually crossed fibers is deposited under tension onto the polymeric film 2 and 3.

Bonding occurs by applying a layer of adhesive to both surfaces to be bonded, for example, in this case, on the sides meant to face each other of the polymeric layer 2 and 3 and of the layer of fibers 5.

Bonding occurs by means of a double induction process and once the adhesive deposited onto the two mutually opposite sides has dried the material is passed through a calender in order to produce bonding. The term "calender", in this case, designates a sort of press which is adapted to facilitate the mutual bonding of the various layers that constitute the material.

This entails a reduction in the consumption of adhesive with respect to conventional technologies.

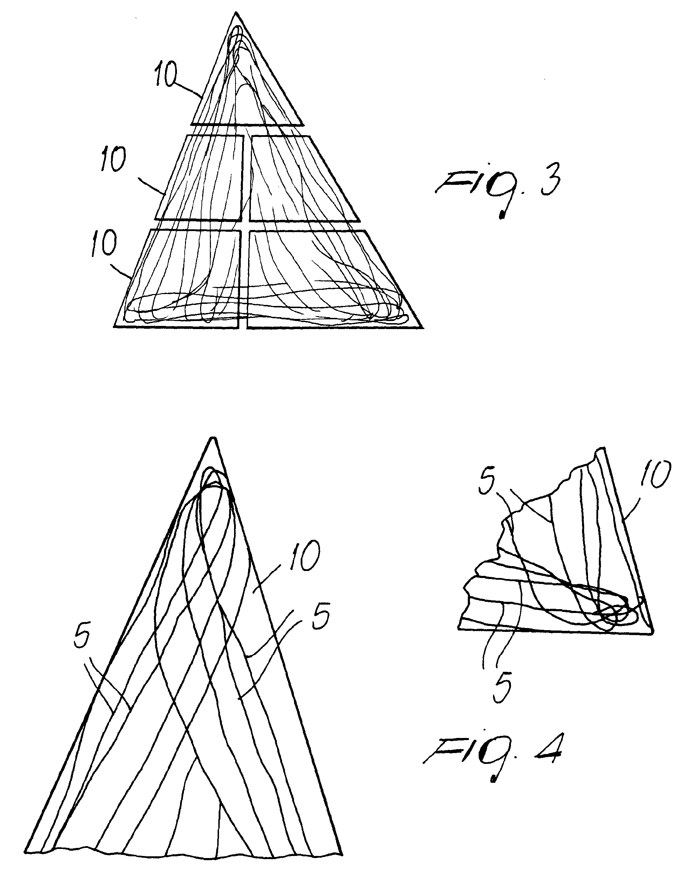

Moreover, as shown in Figure 4, the head, clew and tack points of a sail can be manufactured by using the material according to the invention, without requiring additional reinforcements.

The mutual crossing of the fibers of the layer of fibers 5 in fact allows to provide a "natural" reinforcement at the critical points of the sail.

Figure 4 illustrates in detail, for two different "corner" points of a sail made of the material according to the invention, how it is possible to use said fibers 5 to obtain, at the corner, a weave which gives natural rigidity and reinforcement to the sail.

It should also be noted that the layer 5 of fibers is actually constituted by a single thread of fiber which runs uninterruptedly from one end of the panel of composite material to the other.

This entails that the thread of fiber that constitutes the layer 5 runs from one end of the panel to the other and must therefore necessarily cross in order to return to the starting point.

It is of course possible to provide for more than one thread of fibers, but what needs to be pointed out is that in any case the one or more threads of fibers provided in the layer of fibers 5 are "continuous" threads which accordingly run from one end of the panel of material to the other without discontinuities.

The composite material according to the invention therefore allows to provide, for example, sails with a smaller number of panels than normally required for conventional sails.

The number of panels, designated by the reference numeral 10, can be smaller because the arrangement of the fibers along each panel (layer of fibers 5) can be such as to avoid having to arrange a plurality of panels side by side.

The orientation of the fibers 5 along the different panels in fact does not produce regions with points of great discontinuity between the orientation of the fibers of one panel and the orientation of the adjacent panel, and this allows to use a smaller number of panels to obtain a chosen stress distribution along the edges of the sail formed with said panels 10.

Moreover, the fiber density of the various panels that constitute the sail can be differentiated among the panels according to requirements, and this entails the provision of a sail with weight characteristics which differ in its various regions. It is therefore evident that it is possible to obtain a sail which is lighter than a sail formed monolithically (with a mold), since the reinforced areas can be chosen at will and there is no need to oversize, in terms of weight, the entire surface of the sail, i.e., including areas that are not subjected to particular stresses.

In practice it has been observed that the composite material according to the invention fully achieves the intended aim and objects, since it allows to have a considerably higher shape permanence to stress than conventional materials, indeed because of the particular nonparallel and crossed arrangement of the fibers that compose the one or more layers of fibers interposed in a sandwich-like configuration between the polymeric films and the stabilization mesh.

Moreover, the particular arrangement of nonparallel and crossed fibers allows, if the material is used to manufacture a sail, to avoid the need to resort to reinforcements in the critical points of the sail, i.e., at the clew, head and tack points.

Moreover, the particular bonding method used, with deposition of adhesive with double induction, allows to reduce the amount of adhesive required and accordingly allows to obtain a composite material which is lighter than materials manufactured with known calendering technologies.

Another advantage of the material according to the invention is the fact that if it is used as a material for manufacturing sails it is possible to assemble a sail by using a significantly smaller number of panels than sails made of conventional materials.

The material thus conceived is susceptible of numerous modifications and variations, all of which are within the scope of the inventive concept; all the details may also be replaced with other technically equivalent elements.

In practice, the materials used, so long as they are compatible with the specific use, as well as the dimensions, may be any according to requirements and to the state of the art. This means that the material that provides the flexible polymeric outer film, the material that provides the bidirectional or three-directional mesh layer and the material that provides the layer of fibers may be any without thereby having to modify the structure of the composite material described above.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A composite material, particularly for sails and the like, comprising:
a first outer polymeric film and a second outer polymeric film;
a mesh layer interposed between said first and second outer films;
at least one layer of fibers interposed between said mesh layer and one of said first and second outer films;
characterized in that said at least one layer of fibers is composed of mutually crossed nonparallel individual fibers.

2. The material according to claim 1, characterized in that it comprises two layers of individual straight, nonparallel and crossed fibers which are arranged respectively between said first and second outer films and said mesh layer.

3. The material according to claim 1, characterized in that said at least one layer of crossed nonparallel fibers is applied under tension to one of said first and second outer films.

4. The material according to one or more of the preceding claims, characterized in that said at least one layer of nonparallel and crossed fibers comprises a single fiber thread which is arranged so as to run from one end of said layer to the other, crossing repeatedly.

5. The material according to one or more of the preceding claims, characterized in that said at least one layer of fibers and said first or second outer film are mutually bonded by depositing a layer of adhesive onto both sides of said layer of fibers and of said outer film which are meant to mutually couple.

6. The material according to one or more of the preceding claims, characterized in that said first and second outer films comprise a flexible polymeric outer film.

7. The material according to one or more of the preceding claims, characterized in that said mesh layer comprises a bidirectional or three-directional mesh.

8. A panel for manufacturing sails, characterized in that it is constituted by a material according to one or more of the preceding claims.

9. A sail comprising a plurality of mutually adjacent and connected panels, characterized in that each one of said panels is made of a material according to one or more of claims 1 to 7.

10. The sail according to claim 9, characterized in that the tack, clew and head points of the sail are naturally reinforced by said layer of individual crossed fibers.

11. The sail according to claim 9, characterized in that each one of said panels has a fiber density which is chosen according to the type of stress that said panel is to withstand.
